# EUROPEAN PATENT APPLICATION

(11) **EP 4 335 937 A1**
(43) Date of publication of application: **13.03.2024**
(21) Application number: 22811428.6
(22) Date of filing: 27.05.2022
(51) Int. Cl.: C21D 8/12, C21D 9/46, C22C 38/00, C22C 38/60, H01F 1/147, C23C 22/00

(54) **METHOD FOR PRODUCING GRAIN-ORIENTED ELECTRICAL STEEL SHEET**

(30) Priority: 28.05.2021 JP 2021090690
(71) Applicant: JFE Steel Corporation, Tokyo 100-0011 (JP)
(72) Inventor: IMAMURA, Takeshi, Tokyo 100-0011 (JP); YOSHIKAWA, Ayaka, Tokyo 100-0011 (JP); TAKENAKA, Masanori, Tokyo 100-0011 (JP); TAMURA, Kazuaki, Tokyo 100-0011 (JP)
(74) Representative: Hoffmann Eitle
(86) International application number: PCT/JP2022/021833
(87) International publication number: WO 2022/250160

(57) **Abstract**

To provide a method for producing a grain-oriented electrical steel sheet capable of stably obtaining good coating properties over the entire length and width of a steel sheet coil. Disclosed is a method for producing a grain-oriented electrical steel sheet, including subjecting a steel material containing, by mass%, Si: 2.0 % or more and 5.0 % or less, Mn: 0.01 % or more and 0.50 % or less, and one or both of S and Se: 0.001 % or more and 0.100 % or less in total, to hot rolling, followed by cold rolling once, or twice or more with intermediate annealing in between, followed by decarburization annealing, followed by application and drying of an annealing separator mainly composed of MgO, followed by final annealing, followed by flattening annealing, in which the final annealing is performed in an atmosphere where a flow rate of an atmospheric gas is 0.2 L/min or higher per tonne of steel sheet and a dew point is 10 °C or lower, the flattening annealing is accompanied by coating treatment including application of a coating solution, and prior to the application of the coating solution, pickling treatment is performed using an acid with a concentration of 1 % or more and 20 % or less at a temperature of 15 °C or higher for 1 second or more and 60 seconds or less.

## Description

### TECHNICAL FIELD

This disclosure relates to a method for producing a grain-oriented electrical steel sheet suitable for an iron core material of a transformer.

### BACKGROUND

Electrical steel sheets are widely used as iron cores in transformers, motors, and other components. Electrical steel sheets are broadly classified into grain-oriented electrical steel sheets and non-oriented electrical steel sheets. Grain-oriented electrical steel sheets are characterized by the texture in which the <001> orientation, which is an easy magnetization axis of iron, is highly aligned with the rolling direction of the steel sheets. Such a texture is formed by causing secondary recrystallization in final annealing. This secondary recrystallization refers to a phenomenon in which crystal grains in the {110}<001> orientation, so-called Goss orientation, are preferentially grown into giant grains by using grain boundary energy.

A typical technique for producing such secondary recrystallization is to use a precipitate called inhibitor. Specifically, for example, JP S40-15644 B (PTL 1) describes a method using AlN and MnS and JP S51-13469 B (PTL 2) describes a method using MnS and MnSe, and these methods have been put into industrial practice. These methods using inhibitors are useful for stable growth of secondary recrystallized grains, but for the purpose of fine particle distribution of the inhibitors into the steel, it is necessary to perform slab heating at high temperatures of 1300 °C or higher to make the inhibitor components into a solid solution once.

On the other hand, for a material containing no inhibitor components, a technique for developing crystal grains with Goss orientation through secondary recrystallization is described in, for example, JP 2000-129356 A (PTL 3). This technique eliminates impurities such as inhibitor components as much as possible and elicits the dependency of grain boundary energy of primary recrystallized grains on the grain boundary misorientation angle, thus causing the secondary recrystallization of grains with Goss orientation without using inhibitors. This effect is called the texture inhibition effect. This method does not require fine particle distribution of the inhibitor in the steel and has manufacturing advantages over the methods using inhibitors, such as not requiring high-temperature slab heating.

For grain-oriented electrical steel sheets, coating adhesion is an important indicator along with magnetic properties. This is because when used for coil iron core in transformers, bending is performed at the corners, and it is important for insulation to be ensured that the coating is closely adhered to the steel sheet even in these parts. In this regard, JP H2-30778 A (PTL 4) describes a technique to obtain good coating adhesion by performing pickling treatment before application of coating during the flattening annealing.

### CITATION LIST

### Patent Literature

PTL 1: JP S40-15644 B
PTL 2: JP S51-13469 B
PTL 3: JP 2000-129356 A
PTL 4: JP H2-30778 A

### SUMMARY

### (Technical Problem)

However, as described in PTL 4, coating adhesion can be improved by specifying the type of acid, acid concentration, temperature, and treatment time in the pickling treatment, but coating adhesion may become non-uniform within a steel sheet coil, or some parts in the coil may be defective. Accordingly, further improvement is required. In particular, there is a need to improve the coating properties in the central parts of a steel sheet coil in the longitudinal and width directions.

To address the issue of coating adhesion within a steel sheet coil as described above, it would thus be helpful to provide a method for producing a grain-oriented electrical steel sheet that can stably provide good coating properties over the entire length and width of a steel sheet coil.

### (Solution to Problem)

The present disclosure has been successfully achieved starting from experiments to be described below.

### <Experiment 1>

A steel slab for a grain-oriented electrical steel sheet containing, by mass%, C: 0.025 %, Si: 3.14 %, Mn: 0.15 %, and Se: 0.021 % was reheated to a temperature of 1400 °C, then subjected to hot rolling to obtain a hot-rolled sheet of 2.7 mm in thickness, then subjected to hot-rolled sheet annealing at 1000 °C for 15 seconds, then subjected to pickling to remove scale on the steel sheet surface, and then subjected to cold rolling into a sheet thickness of 0.55 mm. Then, after intermediate annealing at 1080 °C for 100 seconds, the second cold rolling was performed to a sheet thickness of 0.23 mm. Then, decarburization annealing was performed at 850 °C for 90 seconds with 50 % H₂ + 50 % N₂ and a dew point of 62 °C. Then, an annealing separator mainly composed of MgO was applied to the steel sheet surface and dried, and then final annealing was performed at 1200 °C for 15 hours. After the application and drying of the annealing separator, only the annealing separator on the steel sheet was collected, and ignition loss was measured and determined to be 3.2 mass% by the method prescribed in JIS K0067:1992.

The atmosphere during the final annealing was an N₂ atmosphere up to 1000 °C during heating, an H₂ atmosphere during the period in which the temperature was held in the range of over 1000 °C to 1200 °C and then lowered down to 1000 °C after the end of holding, and an Ar atmosphere during the subsequent cooling. In this case, the atmospheric dew point and the flow rate of the atmospheric gas (N₂ or H₂) were changed in various ways. Then, after removing the unreacted annealing separator remaining on the steel sheet surface with water washing, pickling treatment was performed with phosphoric acid at a concentration of 5 % and a temperature of 60 °C for 5 seconds, followed by application of a coating solution mainly composed of phosphate, followed by flattening annealing, which involved coating baking (coating treatment) at 850 °C for 50 seconds combined with flattening of the steel sheet.

The coating adhesion of the steel sheet thus obtained was evaluated. The coating adhesion was evaluated by wrapping the steel sheet around cylinders of various diameters and using the minimum diameter at which the coating did not peel off. The smaller this minimum diameter is, the better the coating adhesion is. Samples were taken from each coil, at each end and the central part of the coil in the longitudinal direction, two at each end in the width direction and one in the widthwise center, i.e., a total of nine locations in one coil, 280 mm in the rolling direction and 30 mm in the sheet transverse direction. For each sample, the smallest diameter at which the coating did not peel off was measured. Then, the maximum value at the nine locations was used as the representative value for each coil.

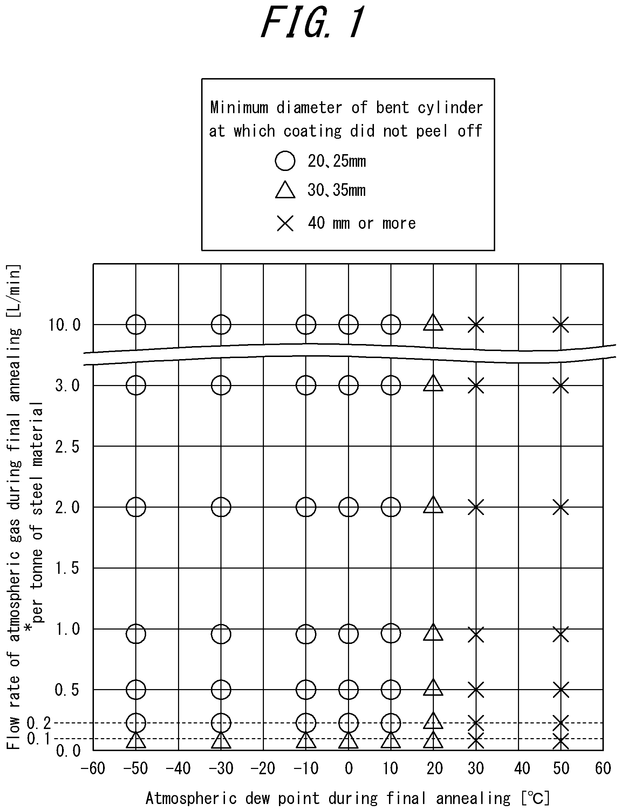

The above evaluation results are summarized in the relationship between the atmospheric dew point and flow rate of atmospheric gas during final annealing and the coating adhesion, as illustrated in FIG. 1. The results in FIG. 1 indicate that in the final annealing atmosphere, good coating adhesion can be obtained when the flow rate of the atmospheric gas is 0.2 L/min or higher per tonne of steel material and the dew point is 10 °C or lower.

In this experiment, the majority of the regions of the coil where representative values were given, i.e., the regions of the coil with the poorest coating adhesion, were in the central parts of the coil in the longitudinal and width directions, respectively.

### <Experiment 2>

A steel slab for a grain-oriented electrical steel sheet containing, by mass%, C: 0.075 %, Si: 2.88 %, Mn: 0.05 %, Se: 0.015 %, Sb: 0.08 %, Al: 0.021 %, and N: 0.008 % was reheated to 1380 °C, then subjected to hot rolling to obtain a hot-rolled sheet of 2.4 mm in thickness, then subjected to hot-rolled sheet annealing at 900 °C for 30 seconds, then subjected to pickling to remove scale on the steel sheet surface, and then subjected to cold rolling into a sheet thickness of 1.6 mm. Then, after intermediate annealing at 1125 °C for 120 seconds, the second cold rolling was performed to a sheet thickness of 0.23 mm. Then, decarburization annealing was performed at 850 °C for 90 seconds with 50 % H₂ + 50 % N₂ and a dew point of 64 °C. Then, an annealing separator mainly composed of MgO was applied to the steel sheet surface and dried, and then final annealing was performed at 1200 °C for 20 hours. After the application and drying of the annealing separator, only the annealing separator on the steel sheet was collected, and ignition loss was measured and determined to be 1.4 mass% by the method prescribed in JIS K0067: 1992.

The atmosphere during the final annealing was an N₂ atmosphere up to 850 °C during heating, an H₂ atmosphere during the period in which the temperature was held in the range of 850 °C to 1200 °C until the end of holding, and an Ar atmosphere during the subsequent cooling. The atmospheric dew point was -50 °C and the flow rate of the atmospheric gas was 1.0 L/min per tonne of steel material. Then, after removing the unreacted annealing separator remaining on the steel sheet surface with water washing, pickling treatment was performed with hydrochloric acid at various concentrations and temperatures for various times, followed by the application of a coating solution mainly composed of phosphate, followed by flattening annealing, which involved coating baking (coating treatment) at 870 °C for 20 seconds combined with flattening of the steel sheet.

The coating adhesion of the steel sheet thus obtained was evaluated. The coating adhesion was evaluated by wrapping the steel sheet around cylinders of various diameters and using the minimum diameter at which the coating did not peel off. Samples were taken from each coil, at each end and the central part of the coil in the longitudinal direction, two at each end in the width direction and one in the widthwise center, i.e., a total of nine locations in one coil, 280 mm in the rolling direction and 30 mm in the sheet transverse direction. For each sample, the smallest diameter at which the coating did not peel off was measured. Then, the maximum value at the nine locations was used as the representative value for each coil.

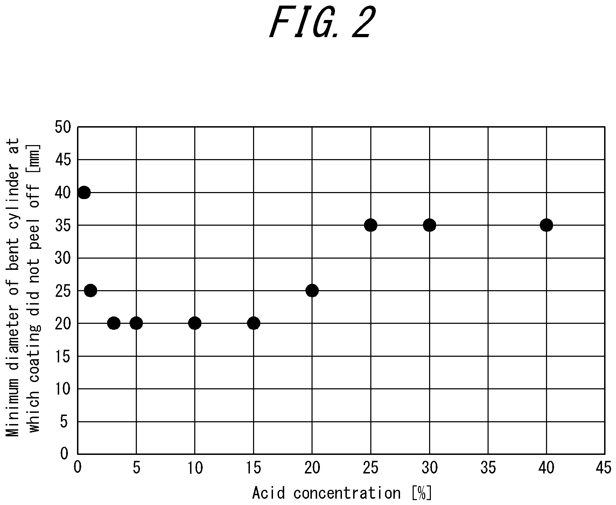

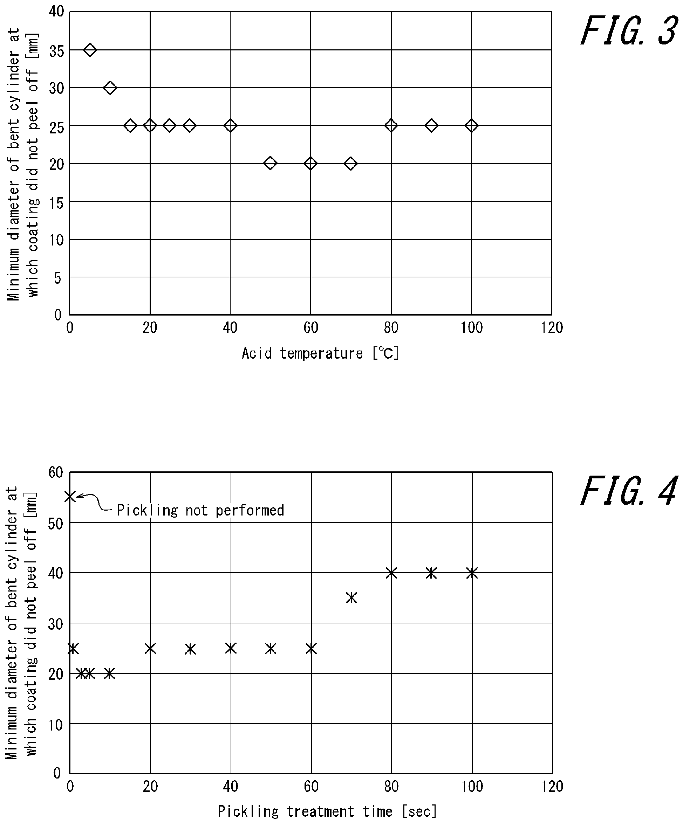

The above evaluation results are illustrated in FIGS. 2 to 4, respectively, for the relationship between the coating adhesion and the acid concentration, acid temperature, and pickling treatment time related to the pickling treatment prior to the application of the coating solution. Experiments were also conducted under conditions where pickling treatment was not performed prior to the application of the coating solution, and the results of the evaluation of coating adhesion are illustrated in FIG. 4 as the pickling treatment time being 0 seconds for the dependency of pickling treatment time. These results illustrated in FIGS. 2 to 4 indicate that good coating adhesion is achieved in flattening annealing by performing pickling treatment at a temperature of 15 °C or higher for 1 second or more and 60 seconds or less using an acid with a concentration of 1.0 mass% or more and 20.0 mass% or less before application of the coating solution.

In these experiments, the majority of the regions of the coil that gave representative values, i.e., the regions of the coil with the poorest coating adhesion, were in the central parts of the coil in the longitudinal and width directions, respectively.

As a result of the above experiments, it was found that good coating properties can be obtained for the entire length and width of a steel sheet coil by specifying the conditions of pickling treatment prior to the application of the coating solution and the conditions of the atmosphere introduced in the final annealing. It was also found that the regions where coating adhesion was poor was in the central parts of the coil in both the longitudinal and width directions. Although the mechanism of the phenomenon described above is not clear, the present inventors consider as follows.

The degradation of coating adhesion is presumably due to the concentration of S and Se in the vicinity of the interface between the steel substrate and the coating, as pointed out in PTL 4. The S and Se are present in the steel before final annealing in the form of precipitates such as MnS and MnSe. During prolonged final annealing, these precipitates decompose and S and Se are liberated and diffuse to the surface, reacting with H at the surface and released into the gas phase as H₂S and H₂Se, some of which, however, remain in the vicinity of the interface between the steel substrate and the coating and are thought to induce the degradation of coating adhesion as described above. Although in the technology described in PTL 4, the objective was to remove S and Se by pickling treatment, judging from the results of the above experiments, the central parts of the coil in the longitudinal and width directions are at a distance from the respective edges of the steel sheet, and are thus difficult for the atmosphere in final annealing, in which annealing is performed on a coil, to reach. This fact makes it difficult for S and Se to be released into the gas phase, and results in extremely high enrichment of S and Se in the vicinity of the interface between the steel substrate and the coating. Accordingly, it is possible that pickling treatment alone was not sufficient to suppress the deterioration of coating adhesion. It is considered that by keeping the flow rate of the atmospheric gas at final annealing above a certain level, the gas distribution in the central parts of the coil in both the longitudinal and width directions is promoted, and the gas phase release of H₂S and H₂Se is facilitated, thereby makes it possible to reduce the amount of enrichment in the vicinity of the interface between the steel substrate and the coating.

As for the dew point, it is assumed that it acts on the MgO used as an annealing separator, yielding a good atmospheric gas distribution between the sheets of steel. Although the annealing separator is suspended in water and applied as a slurry, the surface layer of the MgO particles is hydrated by the water to Mg(OH)₂. This shows a slight volume expansion. However, it is considered that by keeping the atmospheric dew point at final annealing below a certain level, the moisture is released and the volume shrinks, which improves the atmospheric gas distribution. Inferring from this mechanism, it is desirable for MgO to be hydrated and expanded to some extent before final annealing, since it is expected to shrink in volume during final annealing, yielding a better gas distribution. In light of the results of Experiment 2, it is assumed that MgO having a hydration content of 1 mass% or more is effective. In this case, MgO having a hydration content of 1 mass% or more means that the ignition loss (according to JIS K0067:1992) after drying is 1 mass% or more in this annealing separator mainly composed of MgO.

As described above, the present inventors have come to the knowledge that good coating characteristics can be stably obtained by specifying the conditions of pickling treatment prior to the application of the coating solution and the conditions of the atmosphere introduced in the final annealing. The present disclosure is based on the above discoveries.

Specifically, primary features of the present disclosure are as follows.
1. A method for producing a grain-oriented electrical steel sheet, comprising subjecting a steel material containing, by mass%, Si: 2.0 % or more and 5.0 % or less, Mn: 0.01 % or more and 0.50 % or less, and one or both of S and Se: 0.001 % or more and 0.100 % or less in total, to hot rolling, followed by cold rolling once, or twice or more with intermediate annealing in between, followed by decarburization annealing, followed by application and drying of an annealing separator mainly composed of MgO, followed by final annealing, followed by flattening annealing, wherein the final annealing is performed in an atmosphere where a flow rate of an atmospheric gas is 0.2 L/min or higher per tonne of steel sheet and a dew point is 10 °C or lower, the flattening annealing is accompanied by coating treatment including application of a coating solution, and prior to the application of the coating solution, pickling treatment is performed using an acid with a concentration of 1.0 mass% or more and 20.0 mass% or less at a temperature of 15 °C or higher for 1 second or more and 60 seconds or less.
2. The method for producing a grain-oriented electrical steel sheet according to aspect 1, wherein the acid is one of phosphoric acid, hydrochloric acid, sulfuric acid, or nitric acid.
3. The method for producing a grain-oriented electrical steel sheet according to aspect 1 or 2, wherein the annealing separator has an ignition loss after the drying of 1.0 mass% or more and 7.0 mass% or less.

### (Advantageous Effect)

According to the present disclosure, good coating properties can be stably obtained over the entire length and width of a steel sheet by specifying the conditions of pickling treatment prior to the application of the coating solution and the conditions of the atmosphere introduced in the final annealing.

### BRIEF DESCRIPTION OF THE DRAWINGS

In the accompanying drawings:
FIG. 1 illustrates the relationship between the atmospheric dew point and the flow rate of the atmospheric gas during final annealing and the coating adhesion;
FIG. 2 illustrates the relationship between the acid concentration and the coating adhesion in pickling treatment prior to the application of the coating solution;
FIG. 3 illustrates the relationship between the acid temperature and the coating adhesion in pickling treatment prior to the application of the coating solution; and
FIG. 4 illustrates the relationship between the pickling treatment time and the coating adhesion in pickling treatment prior to the application of the coating solution.

### DETAILED DESCRIPTION

The present disclosure will be described in detail hereinafter.

### <Steel Material>

First of all, for the chemical composition of the steel material (steel slab) of a grain-oriented electrical steel sheet, desirable compositional ranges will be described below. In the following description, "%" regarding components denotes "mass%" unless otherwise noted.

### Si: 2.0 % or more and 5.0 % or less

Si is an element necessary for increasing the specific resistance of steel and reducing iron loss. However, a Si content below 2.0 % is not effective and a Si content above 5.0 % deteriorates the workability of steel and makes rolling difficult. Therefore, the Si content is 2.0 % or more and 5.0 % or less. The Si content is desirably 3.0 % or more. The Si content is desirably 3.6 % or less.

### Mn: 0.01 % or more and 0.50 % or less

Mn is an element necessary for achieving satisfactory hot workability of steel.

However, a Mn content below 0.01 % is not effective and a Mn content above 0.50 % deteriorates the magnetic flux density of the product sheet. Therefore, the Mn content is 0.01 % or more and 0.50 % or less. The Mn content is desirably 0.03 % or more. The Mn content is desirably 0.15 % or less.

One or both of S and Se: 0.001 % or more and 0.100 % or less in total Since the main reason for the solution of the problem is considered to be S and Se in the steel, the present disclosure assumes the inclusion of these elements. In other words, since a total content of S and Se below 0.001 % will not cause the problem itself, while a total content thereof above 0.100 % will make secondary recrystallization difficult, the sum of one or both of S and Se is limited in the range of 0.001 % to 0.100 %. The total content is desirably 0.003 % or more. The total content is desirably 0.030 % or less.

While the basic components of the present disclosure have been described, the steel material disclosed herein may further contain the following elements as appropriate.

Specifically, for the purpose of suppressing edge cracking and surface defects during casting and hot rolling, the steel material may contain C in an amount of 0.01 % or more and 0.10 % or less. The C content is desirably 0.03 % or more. The C content is desirably 0.08 % or less.

When AlN is used as an inhibitor, the steel material may contain Al in an amount of 0.01 % or more and 0.04 % or less and N in an amount of 0.003 % or more and 0.010 % or less.

In addition, for the purpose of improving the magnetic properties, Ni: more than 0 % and 1.50 % or less, Cr: more than 0 % and 0.50 % or less, Cu: more than 0 % and 0.50 % or less, P: more than 0 % and 0.50 % or less, Sb: more than 0 % and 0.50 % or less, Sn: more than 0 % and 0.50 % or less, Bi: more than 0 % and 0.50 % or less, Mo: more than 0 % and 0.50 % or less, B more than 0 ppm and 25 ppm or less, Nb: more than 0 % and 0.020 % or less, V: more than 0 % and 0.010 % or less, Zr: more than 0 % and 0.10 % or less, Co: more than 0 % and 0.050 % or less, Pb: more than 0 % and 0.0100 % or less, As: more than 0 % and 0.0200% or less, Zn: more than 0 % and 0.020 % or less, W: more than 0 % and 0.0100 % or less, Ge: more than 0 % and 0.0050 % or less, and Ga: more than 0 % and 0.0050 % or less can be added singly or in combination of two or more of these. If the amount of each added element exceeds the corresponding upper limit, the growth of secondary recrystallized grains may be suppressed and magnetic properties may deteriorate.

### <Production Process>

Steel material with the above components may be produced as a slab by the usual ingot casting or continuous casting, or as a thin slab or thinner cast steel with a thickness of 100 mm or less by direct casting. Although the slab or thin slab or thinner cast steel as the steel material is usually reheated and then hot rolled, it may be subjected to hot rolling immediately after casting without heating.

In hot rolling, especially in hot rolling after reheating as described above, it is desirable from the perspective of microstructural control of a hot-rolled sheet to perform at least one pass of rough rolling at 900 °C or higher and 1200 °C or lower, followed by two or more passes of finish rolling at 700 °C or higher and 1000 °C or lower. After the hot rolling, the steel material can be wound into a coil. In this case, from the viewpoint of both controlling carbide morphology and preventing defects such as cracking, the coiling temperature is desirably set to 400 °C or higher. From the same viewpoint, the coiling temperature is desirably set to 750 °C or lower. The coiling temperature is more desirably 500 °C or higher. The coiling temperature is more desirably 700 °C or lower.

After the hot rolling, hot-rolled sheet annealing may be performed if necessary. When hot-rolled sheet annealing is performed, the microstructure can be homogenized and the variation in magnetic properties can be reduced. From the viewpoint of the microstructural homogeneity, the temperature condition for the hot-rolled sheet annealing is desirably 800 °C or higher. From the same viewpoint, It is desirably 1250 °C or lower. In addition, the holding time for the hot-rolled sheet annealing is desirably 5 seconds or more. The temperature condition for the hot-rolled sheet annealing is more preferably 900 °C or higher. It is more preferably 1150 °C or lower. The holding time for the hot-rolled sheet annealing is more preferably 10 seconds or more. It is more preferably 180 seconds or less. After the hot-rolled sheet annealing, cooling can be performed. In terms of morphological control of the secondary phase and precipitates, such cooling is performed with a cooling rate in the temperature range from 800 °C to 350 °C of desirably 5 °C/s or higher. The cooling rate in this temperature range is desirably 100 °C/s or lower. The cooling rate in this temperature range is more desirably 15 °C/s or higher. The cooling rate in this temperature range is more desirably 45 °C/s or lower.

Then, it is desirable to remove the scale on the steel sheet surface formed during the hot rolling. Any methods may be used, such as the use of heated acid, mechanical removal of scale, and other known methods. Then, cold rolling is performed once, or twice or more with intermediate annealing in between, to obtain a final sheet thickness, and then decarburization annealing is performed. When intermediate annealing is performed, it is desirable from the microstructural control perspective to hold the product in a temperature range from 800 °C to 1250 °C for 5 seconds or more. In cooling after the holding during the intermediate annealing, in terms of morphological control of the second phase and precipitates, the cooling is performed with a cooling rate in the temperature range from 800 °C to 350 °C of desirably 5 °C/s or higher. The cooling rate in this temperature range is desirably 100 °C/s or lower. The cooling rate in this temperature range is more desirably 15 °C/s or higher. The cooling rate in this temperature range is more desirably 45 °C/s or lower. Before the intermediate annealing, the steel sheet is desirably degreased to remove the rolling oil originating from the preceding step. On the other hand, after the intermediate annealing, it is desirable to remove scale from the steel sheet surface. Any methods may be used, such as the use of heated acid, mechanical removal of scale, and other known methods.

In the cold rolling, a lubricant such as rolling oil is desirably used to reduce the rolling load and improve the rolling shape. To obtain a good recrystallized texture before secondary recrystallization, the total rolling reduction ratio of final cold rolling is desirably 50 % or more. It is desirably 92 % or less.

After the final cold rolling, the cold-rolled steel sheet is subjected to decarburization annealing. Before that, however, it is desirable to clean the steel sheet surface by degreasing, pickling, or other process. In the decarburization annealing, it is desirable that the cold-rolled steel sheet be held in a temperature range from 750 °C to 950 °C for 10 seconds or more, that the atmospheric gas contain H₂ and N₂, and that the decarburization annealing is performed partially or entirely in a wet atmosphere with a dew point of 20 °C or higher and 80 °C or lower. A more desirable atmospheric condition is such that the dew point is 30 °C or higher and 70 °C or lower in a temperature range from 800 °C to 900 °C.

Then, an annealing separator mainly composed of MgO is applied to the steel sheet and dried. The amount of the annealing separator applied on the steel sheet surface is desirably 2.5 g/m² or more per surface. As used herein, the phrase "mainly composed of MgO" means that the MgO content in the annealing separator is 60 mass% or more in terms of solid content. The content of MgO in the annealing separator is preferably 80 mass% or more in terms of solid content. MgO is applied to the steel sheet as a slurry solution suspended in water. To prevent viscosity increase, the slurry solution is desirably maintained at a constant temperature. The constant temperature is desirably 5 °C or higher. The constant temperature is desirably 30 °C or lower.

As mentioned above, it is desirable to hydrate MgO in an amount of 1.0 mass% or more to ensure a proper atmospheric gas distribution during final annealing. Since an increase in hydration content requires an increase in mixing time, the hydration content is desirably 7.0 mass% or less to reduce the time required. In other words, the annealing separator preferably has an ignition loss after the drying of 1.0 mass% or more. The annealing separator preferably has an ignition loss after the drying of 7.0 mass% or less. The ignition loss is measured in accordance with JIS K0067: 1992.

The slurry solution of the annealing separator is desirably divided into two tanks, one for preparation and the other for application, in order to maintain a constant slurry concentration when applying the solution. This annealing separator can be applied as a slurry solution and dried, and then final annealing can be performed to develop secondary recrystallized grains and form a forsterite film. In the final annealing, to complete the secondary recrystallization, the temperature should be raised to 800 °C or higher, or to 1050 °C or higher if a forsterite film is to be formed.

Since final annealing generally takes a long time, coils are charged into the final annealing furnace in an upended state before subjection to annealing. Therefore, it is desirable to wrap a band or other means around the coil before subjection to final annealing to prevent the outer winding of the upended coil from unraveling.

In the final annealing, in order to purify inhibitor-forming elements such as S and Se from the steel and obtain good iron loss properties, it is desirable that the steel sheet be held at a temperature ranging from 1050 °C to 1300 °C for 3 hours or more, and an atmosphere containing H₂ be introduced partially or entirely within the temperature range of 1050 °C or higher.

As mentioned above, in the final annealing, it is important to keep the flow rate of the atmospheric gas per tonne of steel material at 0.2 L/min or higher and the atmospheric dew point at 10 °C or lower. The atmospheric dew point is preferably 0 °C or lower. The flow rate of the atmospheric gas per tonne of steel material is preferably 0.5 L/min or higher. On the other hand, there is no need to place a lower limit on the atmospheric dew point and an upper limit on the flow rate of the atmospheric gas, yet from a cost perspective, the atmospheric dew point is preferably -60 °C or higher, and the flow rate of the atmospheric gas is preferably 5.0 L/min or lower.

After the final annealing, washing, brushing, or pickling is useful to remove the attached annealing separator.

Then, flattening annealing is performed. The flattening annealing is accompanied by coating treatment including application of a coating solution. Prior to the application of the coating solution, pickling treatment is performed using an acid with a concentration of 1.0 % or more and 20.0 % or less at a temperature of 15 °C or higher for 1 second or more and 60 seconds or less. Such pickling treatment is essential, as described above. The concentration of the acid is preferably 2.0 % or more. The concentration of the acid is preferably 10.0 % or less. The temperature of the acid is preferably 40 °C or higher. The temperature of the acid is preferably 90 °C or lower. The duration of the pickling treatment is preferably 2 seconds or more. The duration of the pickling treatment is preferably 15 seconds or less. The acid used in the pickling treatment is desirably one of phosphoric acid, hydrochloric acid, sulfuric acid, or nitric acid.

Furthermore, since electrical steel sheets are often stacked on top of one another when used, it is effective to apply an insulating coating to the steel sheet surface to ensure insulation. The insulation coating is desirably a coating that can add tension to the steel sheet to reduce iron loss.

### EXAMPLES

### (Example 1)

Steel slabs for grain-oriented electrical steel sheets containing, by mass%, Si: 2.99 %, Mn: 0.09 %, and Se: 0.014 %, were each reheated to a temperature of 1400 °C, then subjected to hot rolling to obtain a hot-rolled sheet of 2.7 mm in thickness, then subjected to pickling to remove scale on the steel sheet surface, and then subjected to cold rolling into a sheet thickness of 0.68 mm. Then, after intermediate annealing at 900 °C for 100 seconds, the second cold rolling was performed to a sheet thickness of 0.23 mm. Then, decarburization annealing was performed at 850 °C for 120 seconds with 50 % H₂ + 50 % N₂ and a dew point of 62 °C. Then, an annealing separator mainly composed of MgO was applied to the steel sheet surface and dried, and then final annealing was performed at 1210 °C for 10 hours. After the application and drying of the annealing separator, only the annealing separator on the steel sheet was collected, and ignition loss was measured and determined to be 2.5 % by the method prescribed in JIS K0067:1992.

The atmosphere during the final annealing was an N₂ atmosphere up to 1000 °C during heating, an H₂ atmosphere during the period in which the temperature was held in the range of 1100 °C to 1210 °C and then lowered down to 1000 °C after the end of holding, and an Ar atmosphere during the subsequent cooling. In this case, the atmospheric dew point and the flow rate of the atmospheric gas were changed as presented in Table 1. Then, after removing the unreacted annealing separator remaining on the steel sheet surface with water washing, pickling treatment was performed with phosphoric acid at the acid concentrations and acid temperatures listed in Table 1 for the time listed in Table 1, followed by application of a coating solution mainly composed of phosphate, followed by flattening annealing, which involved coating baking (coating treatment) at 820 °C for 100 seconds combined with flattening of the steel sheet.

The coating adhesion of each steel sheet thus obtained was evaluated. The coating adhesion was evaluated by wrapping each steel sheet around cylinders of various diameters and using the minimum diameter at which the coating did not peel off. Samples for evaluation were taken from each coil, at each end and the center of the coil in the longitudinal direction, two at each end in the width direction and one in the widthwise center, i.e., a total of nine locations in one coil, 280 mm in the rolling direction and 30 mm in the sheet transverse direction. For each sample, the smallest diameter at which the coating did not peel off was measured. Then, the maximum value at the nine locations was used as the representative value for each coil. Samples for magnetic evaluation were separately taken from the regions where representative values for coating adhesion were given, and the iron loss W_{17/50} (iron loss upon excitation at a magnetic flux density of 1.7 T and a frequency of 50 Hz) was measured using the method prescribed in JIS C2550-1 (2011). The results are listed in Table 1. It can be seen from the table that grain-oriented electrical steel sheets with excellent coating adhesion and iron loss properties can be obtained according to the present disclosure.

### [Table 1]

**Table 1**

| No. | Atmospheric dew point | Atmospheric flow rate | Acid concentration | Acid temp. | Pickling treatment time | Iron loss W_{17/50} | Coating adhesion | Remarks |
|---|---|---|---|---|---|---|---|---|
| | (°C) | (L/min) | (%) | (°C) | (sec) | (W/kg) | (mm) | |
| 1 | -45 | 0.3 | 10 | 65 | 7 | 0.856 | 20 | Example |
| 2 | 5 | 1.2 | 20 | 30 | 10 | 0.881 | 20 | Example |
| 3 | -35 | 4.2 | 3 | 90 | 2 | 0.876 | 20 | Example |
| 4 | -20 | 0.7 | 10 | 70 | 55 | 0.872 | 25 | Example |
| 5 | -40 | 0.5 | 5 | 55 | 7 | 0.876 | 20 | Example |
| 6 | 25 | 0.7 | 10 | 55 | 15 | 1.245 | 70 | Comparative example |
| 7 | -40 | 0.1 | 10 | 55 | 7 | 0.869 | 55 | Comparative example |
| 8 | -45 | 0.8 | 0.4 | 55 | 7 | 0.862 | 45 | Comparative example |
| 9 | -50 | 0.6 | 25 | 55 | 7 | 0.878 | 35 | Comparative example |
| 10 | -35 | 0.9 | 10 | 13 | 7 | 0.857 | 55 | Comparative example |
| 11 | -35 | 0.7 | 10 | 55 | 0.5 | 0.882 | 50 | Comparative example |
| 12 | -55 | 0.7 | 3 | 25 | 120 | 0.860 | 40 | Comparative example |
| *Underlined if outside the scope of the disclosure. | | | | | | | | |

### (Example 2)

Steel slabs for grain-oriented electrical steel sheets containing, by mass%, C: 0.075 %, Si: 3.66 %, Mn: 0.24 %, and S: 0.028 % were each reheated to a temperature of 1420 °C, then subjected to hot rolling to obtain a hot-rolled sheet of 2.2 mm in thickness, then subjected to hot-rolled sheet annealing at 980 °C for 30 seconds, then subjected to pickling to remove scale on the steel sheet surface, and then subjected to cold rolling into a sheet thickness of 1.20 mm. Then, after intermediate annealing at 1100 °C for 100 seconds, the second cold rolling was performed to a sheet thickness of 0.23 mm. Then, decarburization annealing was performed at 850 °C for 120 seconds with 48 % H₂ + 52 % N₂ and a dew point of 63 °C. Then, an annealing separator mainly composed of MgO was applied to the steel sheet surface and dried, and then final annealing was performed at 1200 °C for 10 hours. The liquid temperature of the application solution of the annealing separator was set at 10 °C when it was prepared, and the hydration content of MgO was varied by changing the preparation time, as described in Table 2. The hydration content was determined by taking only the annealing separator on the steel sheet after the application and drying of the annealing separator and measuring ignition loss by the method prescribed in JIS K0067: 1992.

The atmosphere during the final annealing was an N₂ atmosphere up to 900 °C during heating, an H₂ atmosphere during the period in which the temperature was raised from 900 °C to 1200 °C, held at 1200 °C, and lowered down to 900 °C after the end of holding, and an Ar atmosphere during the subsequent cooling. At this time, the atmospheric dew point was at -55 °C and the flow rate of the atmospheric gas per tonne of steel material was 1.5 L/min. The unreacted annealing separator remaining on the steel sheet surface was then removed by water washing, followed by pickling treatment at 60 °C for 5 seconds with the acid type and acid concentration listed in Table 2. Then, a coating solution mainly composed of phosphate was applied, and flattening annealing was then performed, involving coating baking (coating treatment) at 860 °C for 35 seconds combined with flattening of the steel sheet.

The coating adhesion of each steel sheet thus obtained was evaluated. The coating adhesion was evaluated by wrapping each steel sheet around cylinders of various diameters and using the minimum diameter at which the coating did not peel off. Samples for evaluation were taken from each coil, at each end and the center of the coil in the longitudinal direction, two at each end in the width direction and one in the widthwise center, i.e., a total of nine locations in one coil, 280 mm in the rolling direction and 30 mm in the sheet transverse direction. For each sample, the smallest diameter at which the coating did not peel off was measured. Then, the maximum value at the nine locations was used as the representative value for each coil. Samples for magnetic evaluation were separately taken from the regions where representative values for coating adhesion were given, and the iron loss W_{17/50} (iron loss upon excitation at a magnetic flux density of 1.7 T and a frequency of 50 Hz) was measured using the method prescribed in JIS C2550-1 (2011). The results are listed in Table 2. It can be seen from the table that grain-oriented electrical steel sheets with excellent coating adhesion and iron loss properties can be obtained according to the present disclosure.

### [Table 2]

**Table 2**

| No. | Acid type | Acid concentration | Hydration of MgO | Iron loss W_{17/50} | Coating adhesion | Remarks |
|---|---|---|---|---|---|---|
| | | (%) | (mass%) | (W/kg) | (mm) | |
| 13 | hydrochloric acid | 0.5 | 3.5 | 0.846 | 50 | Comparative example |
| 14 | hydrochloric acid | 7 | 0.5 | 0.841 | 25 | Example |
| 15 | hydrochloric acid | 7 | 3.5 | 0.840 | 20 | Example |
| 16 | hydrochloric acid | 30 | 3.5 | 0.851 | 45 | Comparative example |
| 17 | phosphoric acid | 0.5 | 3.5 | 0.862 | 45 | Comparative example |
| 18 | phosphoric acid | 7 | 0.5 | 0.839 | 25 | Example |
| 19 | phosphoric acid | 7 | 3.5 | 0.851 | 20 | Example |
| 20 | phosphoric acid | 30 | 3.5 | 0.843 | 45 | Comparative example |
| 21 | sulfuric acid | 0.5 | 3.5 | 0.847 | 45 | Comparative example |
| 22 | sulfuric acid | 7 | 0.5 | 0.865 | 25 | Example |
| 23 | sulfuric acid | 7 | 3.5 | 0.855 | 20 | Example |
| 24 | sulfuric acid | 30 | 3.5 | 0.843 | 50 | Comparative example |
| 25 | nitric acid | 0.5 | 3.5 | 0.841 | 55 | Comparative example |
| 26 | nitric acid | 7 | 0.5 | 0.840 | 25 | Example |
| 27 | nitric acid | 7 | 3.5 | 0.842 | 20 | Example |
| 28 | nitric acid | 30 | 3.5 | 0.850 | 55 | Comparative example |
| *Underlined if outside the scope of the disclosure. | | | | | | |

## Claims

1. A method for producing a grain-oriented electrical steel sheet, comprising subjecting a steel material containing, by mass%, Si: 2.0 % or more and 5.0 % or less, Mn: 0.01 % or more and 0.50 % or less, and one or both of S and Se: 0.001 % or more and 0.100 % or less in total, to hot rolling, followed by cold rolling once, or twice or more with intermediate annealing in between, followed by decarburization annealing, followed by application and drying of an annealing separator mainly composed of MgO, followed by final annealing, followed by flattening annealing, wherein
the final annealing is performed in an atmosphere where a flow rate of an atmospheric gas is 0.2 L/min or higher per tonne of steel sheet and a dew point is 10 °C or lower,
the flattening annealing is accompanied by coating treatment including application of a coating solution, and
prior to the application of the coating solution, pickling treatment is performed using an acid with a concentration of 1.0 mass% or more and 20.0 mass% or less at a temperature of 15 °C or higher for 1 second or more and 60 seconds or less.

2. The method for producing a grain-oriented electrical steel sheet according to claim 1, wherein the acid is one of phosphoric acid, hydrochloric acid, sulfuric acid, or nitric acid.

3. The method for producing a grain-oriented electrical steel sheet according to claim 1 or 2, wherein the annealing separator has an ignition loss after the drying of 1.0 mass% or more and 7.0 mass% or less.
